# EUROPEAN PATENT SPECIFICATION

(11) **EP 2 325 033 B1**
(45) Date of publication and mention of the grant of the patent: **04.07.2018**
(21) Application number: 09176623.8
(22) Date of filing: 20.11.2009
(51) Int. Cl.: B60J 5/04

(54) **Water deflector for a vehicle door and method of making it**
Wasserdeflektor für eine Fahrzeugtür und entsprechendes Herstellungsverfahren
Déflecteur d'eau pour portière de véhicule et son procédé de fabrication

(43) Date of publication of application: 25.05.2011
(73) Proprietor: Sanko-Espuma Indústria e Comercio Ltda., Sao Paolo SP (BR)
(72) Inventor: Cyrillo Netto, Domingos Vitiello, Sao Paolo (BR)
(74) Representative: Beck, Michael Rudolf

(56) References cited:
- FR-A7- 2 409 669
- JP-A- 2005 081 833
- US-A- 4 588 627
- US-A1- 2006 017 306

## Description

The present invention refers to a water deflector for vehicle door according to the preamble of claim 1, for preventing water and/or dust from the door from entering the vehicle body, and to its manufacturing process according to claim 13, whose development allowed the attainment of a plastic deflector shaped for covering the inner door panel and openings of the inner panel of vehicle doors, with dimensions to be determined, with an adhesive layer applied to the entire peripheral region and other parts where it may be required and/or possible for its fixation.

Vehicle doors are made with two metal sheets shaped by cold-forming and counterfaced and joined by spot welding. This manufacturing process allows that the external metal sheet be shaped to conform with the vehicle design and the inner sheet to act as an element to structure the set, making the door "rigid", but not heavy, and therefore, relieving stress on the hinges and making it easier for the user to open and close the door to go in and out the vehicle.

Furthermore, the metal inner panel of a vehicle door has at least one large opening therein for mounting, within this internal space, the manual or electric mechanisms responsible for windows operation and the opening and locking of the door, and even an operating mechanism for manual or electric adjustment of rear mirrors. Openings may also be provided for radio speakers.

The large opening of the inner sheet of the door may receive the installation of a finish trim panel which, besides its decorative purpose, should act as an element to support the terminals and as a bracket for objects and arm rest.

It is important to highlight that inner spaces of vehicle doors favor the entry of water and dust through the front part of the door and the sides of windows, known as weather-strip, and if a seal is not placed between the door and the cabin, water and dust may enter the interior of the vehicle and may damage internal accessories and the carpet itself.

As in the case of the metal part, the finish trim panel also contains protuberances which favor sealing and, in case some rupture occurs by the effort of opening or closing door or deformation caused by heat generated by solar radiation, then points of entry of water and dust may form, in which case the sheer collocation of some kind of tape does not offer optimal sealing conditions. Many modern vehicles are equipped with an inner deflector to secure sealing, but as in the case of the finish trim panel, it can also suffer the action of heat and present deformations.

A water deflector for a vehicle door, having breakaway lines defining possible openings, is known from FR 2,409,669 A7.

US 4,588,627 discloses a water deflector according to the preamble of claim 1, comprising a plastic sheet peripherally shaped for covering a part or all of said door inner panel. The sheet has a strip of pressure-sensitive adhesive along its bottom and sides as well as several adhesive pads placed along the upper border. Moreover, the sheet has a plurality of openings for fasteners or the like.

US 2006/0017306 A1 disclosed a vehicle door assembly comprising a barrier panel, made of a polymeric material and vacuum formed to create contours, depressions and projections. The barrier panel also includes one or more tabs, extending outwardly from the main body portion, and are provided with apertures, enabling the attachment to fasteners fixed in the inner door panel 12. Said tabs are provided with a perforated edge, enabling the removal by hand of said tabs from the main body portion of the barrier panel.

Therefore, there is a need in the art for a barrier panel which is readily adaptable to different configurations of door equipments.

This technical problem is solved by a water deflector according to claim 1. Advantageous embodiments are indicated in further claims.

The water deflector for vehicle door for preventing water and/or dust from entering the vehicle body comprises a thin plastic element properly shaped, with adhesive added to its edge and some internal spots, and which will be applied to the opening of the internal sheet for access to the interior part of the vehicle door and to some parts of the internal plastic panel, sealing it and forming a kind of an encapsulation of the inner space preventing water and dust from passing from the inner part of the door to the vehicle interior. Notwithstanding the aforesaid, it will not interfere with the accommodation and operation of accessories, and, due to the constructive form applied to said deflector, it will not exercise pressure on the deflector assuring no risk of rupture.

These deflectors may be projected in different shapes to conform with the type of vehicle and for internal fixation to any of its regions, because there are no specific resources used such as vacuum shaping and placement of false pockets fixed with some kind of high frequency welding or melt, once this piece is formed in all its extension of a sole plastic sheet.

The plastic deflector used is composed by a low density 150 micron-wide polyethylene film and its advantage is that it is self-extinguishable and non-transparent, that is, and it owes the opacity it presents to this characteristic.

This deflector is fixed to the door by means of an adhesive developed specifically for this purpose, the PSA - Pressure Sensitive Adhesive, facilitating the process since the production of the deflector until, and mainly, the handling and final assembly by the client. This adhesive allows the part to be removed and repositioned many times in the usage location, and will not present loss of adhesion, facilitating the operation during future maintenance and/or disassembling.

To facilitate handling from the production to the end use, covering all aspects on packaging, storage, loading, transportation, unloading, internal displacement, usage point and vehicle assembling, the deflectors are stacked one on top of the other, making a set of 10 deflectors, and the adhesive of the bottom piece protected by polyethylene film.

The production stages of the deflector are as follows: adhesiveness, stacking, application of pleated conformations and perforated lines for tearing out and perimeter cut.

The adhesiveness stage consists of the process of applying an adhesive layer along the whole perimeter of one of the faces of the deflector and on some certain inner spots by means of silk-screen process.

The stacking stage consists of keeping a certain number of deflectors joined as a pad with the adhesive layer of the bottom deflector protected by a protective film.

The application of pleated conformations consist of the application of pleats, with appropriate tools to enable the deformation of the water deflector to accommodate the protuberances and elements which are usually present in door cutout to prevent strain from happening on these points of the water deflector.

The die cutting will be performed by die cutting tools for the perimeter shaping of the part and application of cuts and perforated lines to enable the removal of part of the deflector to allow the passage of cables of larger components.

To have a better understanding of the objective of the patent herein, references to the exemplary drawings attached hereto are below:

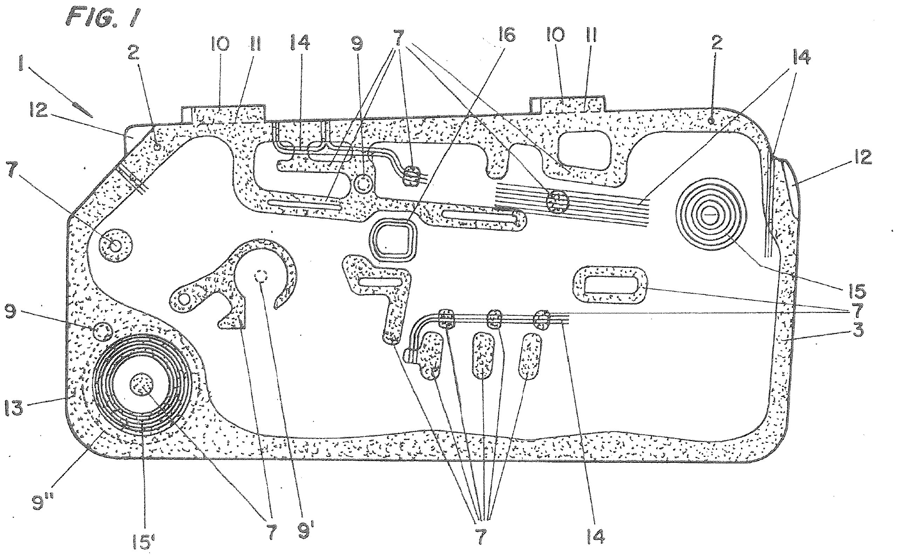

Figure 1 shows, in a posterior view, the inner face of opaque deflector with removable bolts to help installation still present and linear and concentric pleated parts, and removable concentric pleated parts, and removable parts where the perimeter strip and inner spots with adhesive applied thereto can be observed.

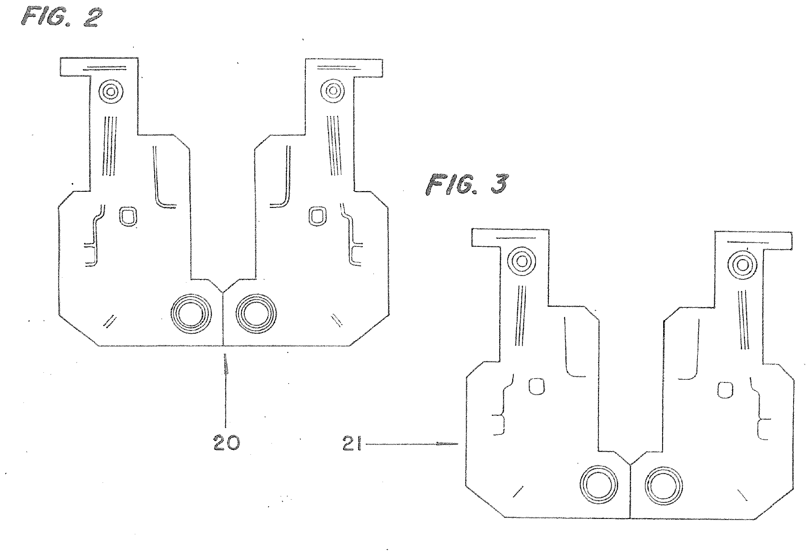

Figure 2 shows, in front view, the metallic parts of a tool corresponding to the superior male mould for shaping, respectively the pleats of the water deflectors of the left door and right door of a determined vehicle model (not specified):
Figure 3 shows, in front view, the metallic parts of a tool corresponding to the inferior female mould of the aforementioned tool for the attainment of additional pleats of water deflectors for the left door and right door of a determined vehicle model (not specified);

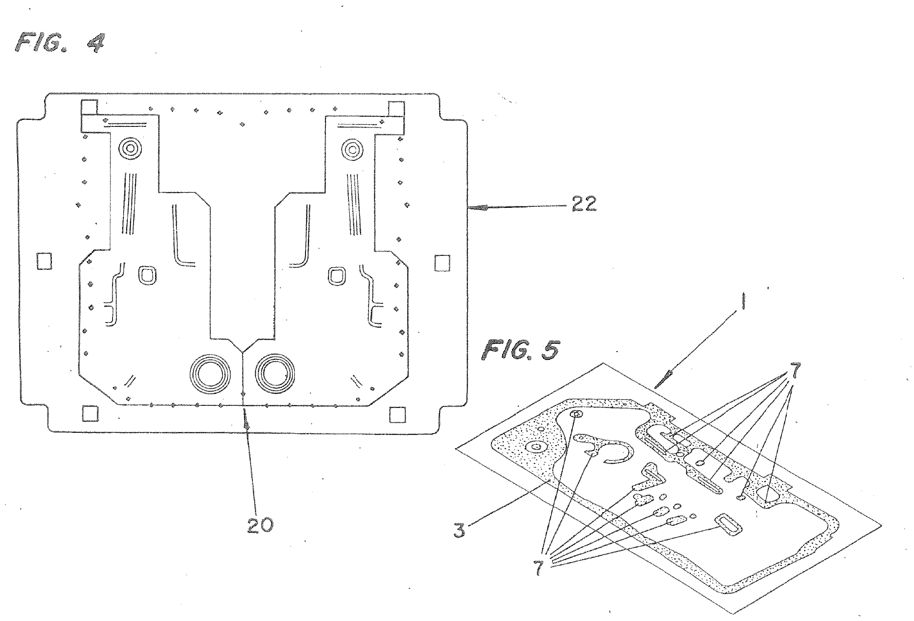

Figure 4 shows, in front view, the tool corresponding to the superior male mould inserted in the wooden frame responsible for its support;
Figure 5 shows, in frontal-superior perspective, the 150-micron-wide low density polyethylene plastic film which received the application, by means of silk-screen process, of a thin adhesive layer on all perimeter of one of the faces of the deflector and in certain inner spots.

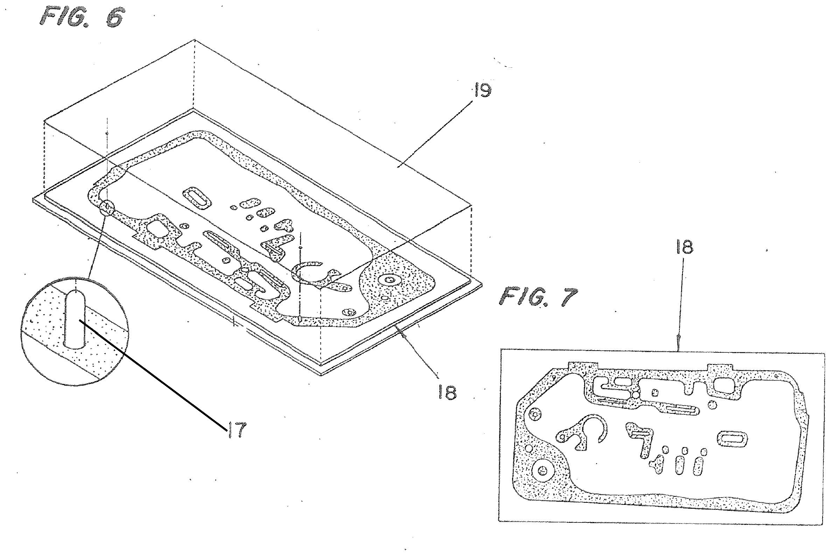

Figure 6 shows, in exploded frontal superior perspective, the detail of placement of the protective adhesive layer of the bottom deflector of the pad through the alignment of the pre-defined holes in the plastic film in a couple of guiding pins (visible in the magnified detail);
Figure 7 shows, in frontal view, the plastic film pad without the linear and concentric pleats;

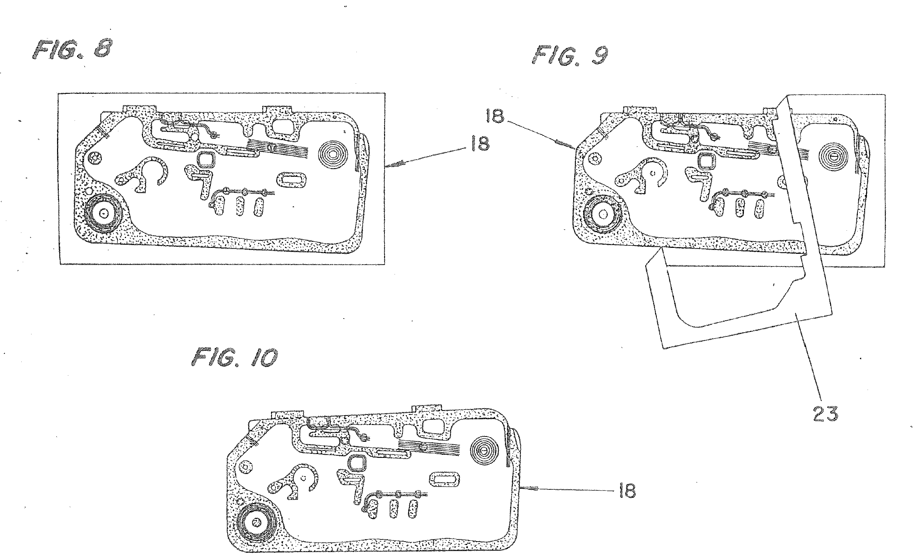

Figure 8 shows, in front view, the plastic film pad after receiving, in the appropriate aforementioned tools, the linear and concentric pleated shapes to allow the deformation of the water deflector to accommodate the protuberances and the elements usually present in door cutouts;
Figure 9 shows, in front view, the detail of removal of peripheral burr of the pad after die cutting in the appropriate cutting tool or incorporated to the aforementioned tools;
Figure 10 shows, in front view, the detail of the pad of plastic water deflectors ready for packaging, storage, loading, transportation, unloading, internal displacement, usage point and assembly to vehicle;

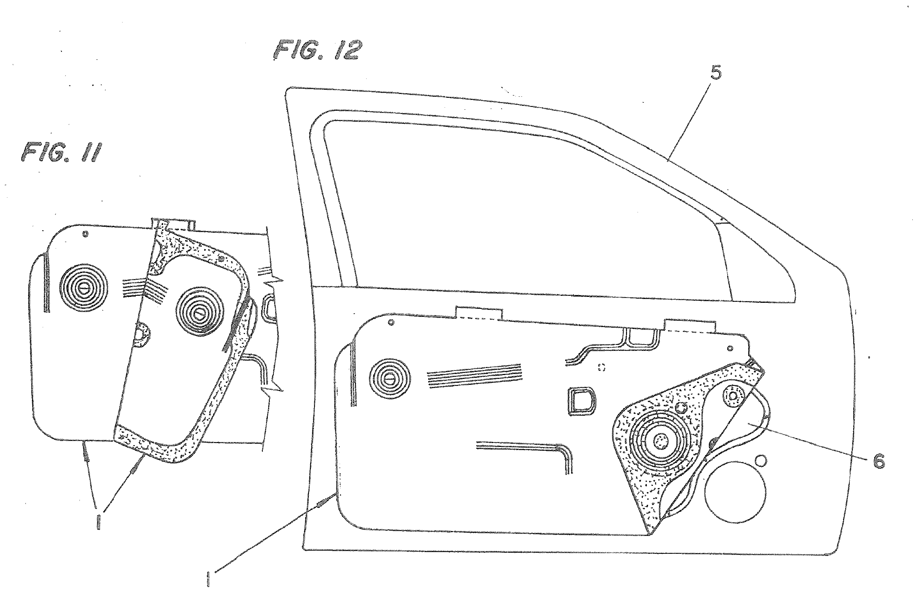

Figure 11 shows, in front view, the beginning of the removal of a deflector from a pad, detaching it from the back of a subsequent deflector or from the protective film;
Figure 12 shows, in front view, the adhesion of the deflector to close the opening of the access to the inner part of the vehicle door;

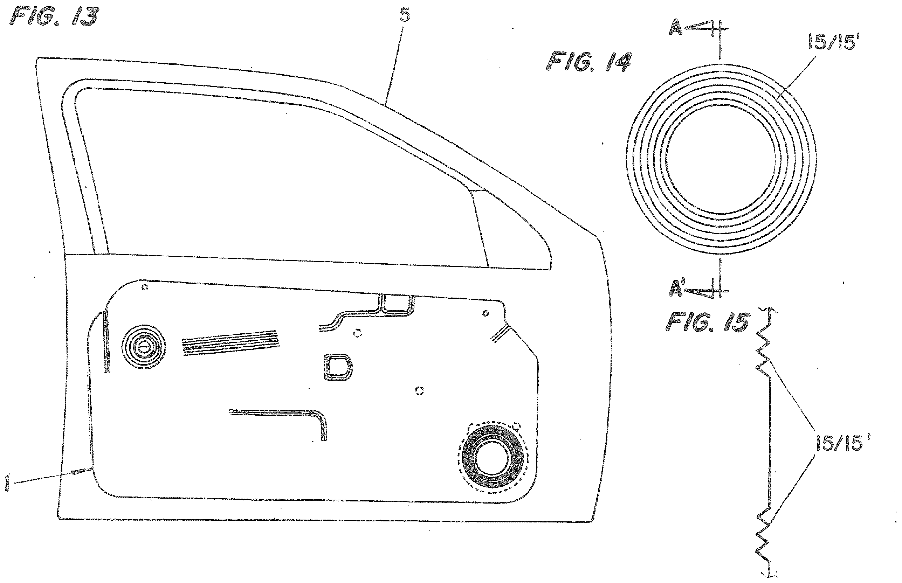

Figure 13 shows, in front view, the bonded reflector sealing the opening of the access to the inner part of the vehicle door;
Figure 14 shows, in front view, the detail of a concentric pleated section to accommodate a speaker cone;
Figure 15 shows, in A-A vertical cut, the detail of the above mentioned concentric pleated section to accommodate a speaker cone;

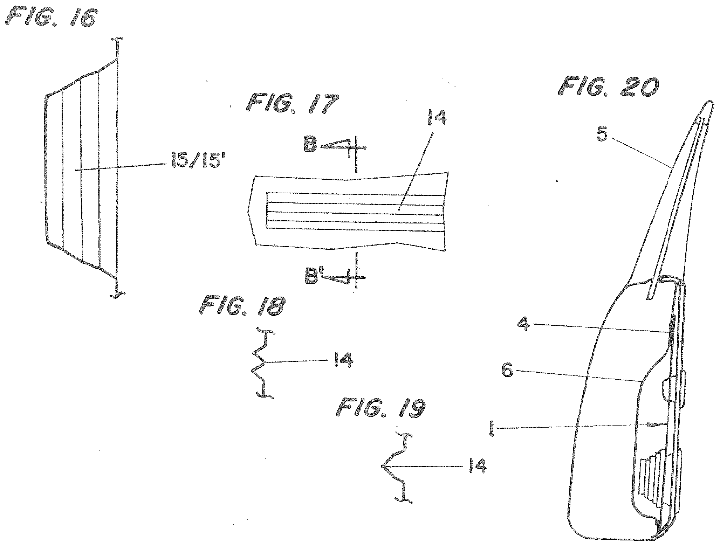

Figure 16 shows, in a vertical cut the detail of the above mentioned pleated section open to accommodate a speaker cone;
Figure 17 shows, in front view, the detail of a linear pleated section to accommodate a bundle of electric cables, protuberances or other;
Figure 18 shows, in B-B vertical view, the detail of the above mentioned pleated section to accommodate a bundle of electric cables, protuberances or other;
Figure 19 shows, in vertical cut, the detail of the above mentioned pleated section open to accommodate a bundle of electric cables, protuberances or other;
Figure 20 shows, in vertical cut, the detail of a vehicle door to which the water deflector was applied and then covered again with the finish trim panel and;

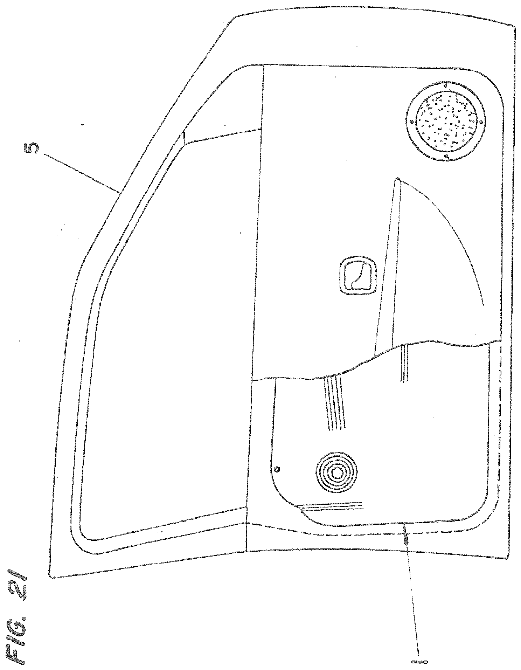

Figure 21 shows, in front view and with a partial cut of the finish trim panel, such deflector under the finish trim panel mentioned above closing the opening of the inner sheet for access to the inner part of the vehicle door.

The present invention comprises a deflector (1), with specific shapes for each vehicle model, manufactured with a 150-micron-wide low density polyethylene opaque film with two small pre-applied holes (2) which will act as alignment guides, with a thin layer of pressure sensitive adhesive - PSA, applied along all its edge (3) to attach to the edge of the opening (4) of the inner panel for access to the inner part of vehicle door (5) or to the edge of the inner plastic panel (6), and to a plurality of central spots (7) for the anchorage to the above mentioned inner plastic panel (6), and, to some spots of adhesive points, of circular fields (8) with breakaway circular lines (9) or breakaway circular lines applied out of the adhesive fields for the passage of cables and bundles, and such adhesive edge (3) contains small superior adhesive brims (10) detachable by a line of breakaway perforations (11) and small un-adhesive side brims (12) and an enlarged section (13); the above mentioned deflector (1) receives the application of a plurality of pleated linear lines (14) to accommodate bundles of electric cables, protuberances or other, and concentric circular pleated lines (15) and (15'), the latter within a breakaway perforated circular pointed line (9"), to accommodate speaker cones, and irregular ring-like concentric pleated lines (16) to the accommodate the door handle.

The manufacturing process involves the application on one of the faces of the film (1), by means of silk-screen process in appropriate equipment (not shown), of the thin layer of pressure sensitive adhesive along all its edge (3) and on a plurality of central spots (7) and, in the sequence, assembled in a template with two guiding pins (17) to fit the above mentioned holes (2), and form a Pad (18) with 10 (ten) deflectors each and whose bottom deflector (1) will be protected by a protective plastic film (19) and will receive the application in a superior male mould (20) and an inferior female mould (21) fixed in wooden supports (22), of a plurality of linear (14) and circular concentric pleats (15) and (15') and, in the sequence, it will have the excluding edge (23) cut with the appropriate cutting tool (not shown). Thus, the pad (18) will be ready for packaging, storage, loading, transportation, unloading internal displacement to the use point, detachment and assembly to the vehicle door.

## Claims

1. Water deflector for a vehicle door, comprising:
a deflector element (1) made of a polyethylene film,
a layer of pressure sensitive adhesive PSA, applied along an edge (3) of the deflector element (1) to attach to an edge of an opening (4) of an inner panel (6) of the vehicle door or to the edge of the inner panel (6), and to a plurality of adhesive areas (7) on the deflector element (1) for connecting to the inner panel (6), **characterized in that** the deflector element (1) is provided with breakaway lines defining possible openings (9, 9', 9") in the deflector element (1), and **in that**
the deflector element (1) is provided with a plurality of pleats (14, 15, 15') to accommodate protuberances.

2. Water deflector of claim 1, wherein said breakaway lines defining possible openings (9, 9', 9") are arranged in adhesive areas (7) or at least partly surrounded by adhesive areas.

3. Water deflector of claim 1 or 2, wherein the adhesive edge (3) comprises adhesive brims (10) detachable by a line of breakaway perforations (11).

4. Water deflector of one of claims 1 to 3, wherein the adhesive edge (3) comprises nonadhesive side brims (12).

5. Water deflector of one of claims 1 to 4, wherein the adhesive edge (3) comprises a section (13) that is enlarged in width.

6. Water deflector of one of claims 1 to 5, wherein said pleated lines include a plurality of pleated linear lines (14) to accommodate bundles of electric cables, and/or protuberances.

7. Water deflector of one of claims 1 to 6, wherein said pleated lines include concentric circular pleated lines (15).

8. Water deflector of one of claims 1 to 7, wherein said pleated lines include concentric circular pleated lines (15') within a breakaway perforated circular pointed line (9"), to accommodate speaker cones.

9. Water deflector of one of claims 1 to 8, wherein the deflector element (1) has irregular ring-like concentric pleated lines (16) to accommodate a door handle.

10. Water deflector of one of claims 1 to 9, wherein the deflector element (1) has two holes (2) acting as alignment guides.

11. Water deflector of one of claims 1 to 10, wherein the deflector element (1) is made of an opaque 150-micron-thick polyethylene film.

12. Vehicle door with a water deflector according to one of the claims 1 to 11, the vehicle door comprising said inner panel (6), wherein the inner panel (6) of the vehicle door is made of plastics material.

13. Method of making a water deflector for a vehicle door as defined in one of claims 1 to 11, comprising the steps: applying on one of the faces of a polyethylene film by means of a silk-screen process a layer of pressure sensitive adhesive along all the edge of said polyethylene film and on further areas on said film, providing a plurality of linear (14), circular (15, 15') and/or irregular ring-like concentric (16) pleats on the deflector (1) by means of a male mould (20) in cooperation with a female mould (21) fixed on wooden supports (22).

14. Method of claim 13, further comprising the steps: after the applying step but before the providing step, assembling the deflector in a template with two guiding pins (17) to fit holes (2) on the polyethylene film, and forming, together with several further deflectors, a pad (18), the bottom deflector of the pad being protected by a protective plastic film (19); and/or after the providing step, cutting off an exceeding edge (23) from the polyethylene film with a cutting tool.

## Patentansprüche

1. Wasserdeflektor für eine Fahrzeugtür, umfassend:
ein Deflektorelement (1) aus einer Polyethylenfolie,
eine Schicht aus einem drucksensiblen Klebstoff (Pressure sensitive Adhesive, PSA), die entlang eines Rand (3) des Deflektorelements (1) aufgebracht ist, um an einem Rand einer Öffnung (4) einer Innenverkleidung (6) der Fahrzeugtür oder an dem Rand der Innenverkleidung (6) zu haften, sowie an einer Vielzahl von Klebebereichen (7) an dem Deflektorelement (1) zur Verbindung mit der Innenverkleidung (6),
**dadurch gekennzeichnet, dass**
das Deflektorelement (1) mit Bruchlinien versehen ist, die mögliche Öffnungen (9, 9', 9") in dem Deflektorelement (1) definieren, und dadurch, dass
das Deflektorelement (1) mit einer Vielzahl von Falten (14, 15, 15') versehen ist, um Vorsprünge aufzunehmen.

2. Wasserdeflektor nach Anspruch 1, wobei die Bruchlinien, welche mögliche Öffnungen (9, 9', 9") definieren, in Klebebereichen (7) angeordnet oder zumindest zum Teil von Klebebereichen umgeben sind.

3. Wasserdeflektor nach Anspruch 1 oder 2, wobei der haftfähige Rand (3) haftfähige Randstücke (10) umfasst, die durch eine Linie von Bruchperforationen (11) abtrennbar sind.

4. Wasserdeflektor nach einem der Ansprüche 1 bis 3, wobei der haftfähige Rand (3) nicht haftfähige Seitenrandstücke (12) umfasst.

5. Wasserdeflektor nach einem der Ansprüche 1 bis 4, wobei der haftfähige Rand (3) einen Abschnitt (13) umfasst, der in der Breite vergrößert ist.

6. Wasserdeflektor nach einem der Ansprüche 1 bis 5, wobei die Bruchlinien eine Vielzahl von linearen Bruchlinien (14) beinhalten, um Bündel aus elektrischen Kabeln und/oder Vorsprünge auszugleichen.

7. Wasserdeflektor nach einem der Ansprüche 1 bis 6, wobei die Bruchlinien eine Vielzahl von konzentrischen runden Bruchlinien (15) beinhalten.

8. Wasserdeflektor nach einem der Ansprüche 1 bis 7, wobei die Bruchlinien eine Vielzahl von konzentrischen runden Bruchlinien (15') innerhalb einer perforierten gepunkteten runden Bruchlinie (9") enthalten, um Konuslautsprecher aufzunehmen.

9. Wasserdeflektor nach einem der Ansprüche 1 bis 8, wobei das Deflektorelement (1) irreguläre, ringähnliche, konzentrische Bruchlinien (16) aufweist, um einen Türgriff aufzunehmen.

10. Wasserdeflektor nach einem der Ansprüche 1 bis 9, wobei das Deflektorelement (1) zwei Löcher (2) aufweist, die als Ausrichtungsführungen dienen.

11. Wasserdeflektor nach einem der Ansprüche 1 bis 10, wobei das Deflektorelement (1) aus einer opaken, 150 Mikrometer dicken Polyethylenfolie besteht.

12. Fahrzeugtür mit einem Wasserdeflektor nach einem der Ansprüche 1 bis 11, wobei die Fahrzeugtür die Innenverkleidung (6) umfasst, wobei die Innenverkleidung (6) der Fahrzeugtür aus einem Kunststoffmaterial besteht.

13. Verfahren zur Herstellung eines Wasserdeflektors für eine Fahrzeugtür nach einem der Ansprüche 1 bis 11, umfassend folgende Schritte:
Aufbringen einer Schicht aus einem drucksensiblen Klebstoff mithilfe eines Siebdruckverfahrens auf eine der Seiten einer Polyethylenfolie entlang aller Ränder der Polyethylenfolie und auf weitere Bereichen der Folie,
Bereitstellen einer Vielzahl von linearen (14), runden (15, 15') und/oder unregelmäßigen, ringähnlichen, konzentrischen (16) Bruchlinien an dem Deflektor (1) mithilfe eines männlichen Formwerkzeugs (20) in Zusammenwirkung mit einem weiblichen Formwerkzeug (21), welche auf Halterungen (22) aus Holz befestigt sind.

14. Verfahren nach Anspruch 13, des Weiteren umfassend folgende Schritte:
nach dem Schritt zum Aufbringen, jedoch vor dem Schritt zum Bereitstellen, Montieren des Deflektors in einer Schablone mit zwei Führungsstiften (17), um Löchern (2) auf der Polyethylenfolie zu entsprechen, und
Bilden, zusammen mit mehreren weiteren Deflektoren, eines Pads (18), wobei der Bodendeflektor des Pads durch eine Schutzschicht aus Kunststoff (19) geschützt ist; und/oder
nach dem Schritt zum Bereitstellen, Abschneiden eines überschüssigen Randes (23) von der Polyethylenfolie mithilfe eines Schneidwerkzeugs.

## Revendications

1. Déflecteur d'eau pour une porte de véhicule comprenant :
un élément déflecteur (1) en film de polyéthylène,
une couche d'adhésif sensible à la pression appliquée le long d'un bord (3) de l'élément déflecteur (1) pour fixer à un bord d'une ouverture (4) d'un panneau intérieur (6) de la porte de véhicule ou au bord du panneau intérieur (6) et à une pluralité de zones adhésives (7) sur l'élément déflecteur (1) pour une liaison au panneau intérieur (6),
**caractérisé en ce que** l'élément déflecteur (1) est pourvu de lignes de séparation qui définissent des ouvertures possibles (9, 9', 9") dans l'élément déflecteur (1) et **en ce que** l'élément déflecteur (1) est pourvu d'une pluralité de plis (14, 15, 15') pour loger des protubérances.

2. Déflecteur d'eau selon la revendication 1, lesdites lignes de séparation qui définissent des ouvertures possibles (9, 9', 9") étant arrangées dans des zones adhésives (7) ou au moins partiellement entourées par des zones adhésives.

3. Déflecteur d'eau selon la revendication 1 ou 2, le bord adhésif (3) comprenant des rebords adhésifs (10) qui peuvent être détachés par une ligne de perforations de séparation (11).

4. Déflecteur d'eau selon l'une des revendications 1 à 3, le bord adhésif (3) comprenant des rebords latéraux non adhésifs (12).

5. Déflecteur d'eau selon l'une des revendications 1 à 4, le bord adhésif (3) comprenant une section (13) qui est de largeur élargie.

6. Déflecteur d'eau selon l'une des revendications 1 à 5, lesdites lignes plissées comprenant une pluralité de lignes linéaires (14) pour loger des faisceaux de câbles électriques et/ou des protubérances.

7. Déflecteur d'eau selon l'une des revendications 1 à 6, lesdites lignes plissées comprenant des lignes plissées circulaires concentriques (15).

8. Déflecteur d'eau selon l'une des revendications 1 à 7, lesdites lignes plissées comprenant des lignes plissées circulaires concentriques (15) à l'intérieur d'une ligne circulaire perforée de séparation avec des points (9") pour loger des cônes de haut-parleur.

9. Déflecteur d'eau selon l'une des revendications 1 à 8, l'élément déflecteur (1) ayant des lignes plissées concentriques irrégulières en forme d'anneau (16) pour loger une poignée de porte.

10. Déflecteur d'eau selon l'une des revendications 1 à 9, l'élément déflecteur (1) ayant deux trous qui agissent comme des guides d'alignement.

11. Déflecteur d'eau selon l'une des revendications 1 à 10, l'élément déflecteur (1) étant en film de polyéthylène opaque d'une épaisseur de 150 microns.

12. Porte de véhicule avec un déflecteur d'eau selon l'une des revendications 1 à 11, la porte de véhicule comprenant ledit panneau intérieur (6), le panneau intérieur (6) de la porte de véhicule étant en une matière plastique.

13. Procédé de fabrication d'un déflecteur d'eau pour une porte de véhicule selon l'une des revendications 1 à 11 comprenant les étapes :
application sur l'une des faces d'un film de polyéthylène au moyen d'un processus de sérigraphie d'une couche d'adhésif sensible à la pression le long de tout le bord dudit film de polyéthylène et sur d'autres zones sur ledit film ;
fourniture d'une pluralité de plis linéaires (14), circulaires (15, 15') et/ou concentriques irréguliers en forme d'anneau (16) sur le déflecteur (1) au moyen d'un moule mâle (20) en coopération avec un moule femelle (21) fixé sur des supports en bois (22).

14. Procédé selon la revendication 13 comprenant de plus les étapes :
après l'étape d'application mais avant l'étape de fourniture, assemblage du déflecteur dans un gabarit avec deux broches de guidage (17) pour ajuster des trous (2) sur le film de polyéthylène et formation, conjointement avec plusieurs autres déflecteurs, d'un coussinet (18), le déflecteur du fond du coussinet étant protégé par un film plastique de protection (19) et/ou après l'étape de fourniture, découpe du bord qui dépasse (23) du film de polyéthylène avec un outil de coupe.
